# EUROPEAN PATENT APPLICATION

(11) **EP 4 589 837 A1**
(43) Date of publication of application: **23.07.2025**
(21) Application number: 24152142.6
(22) Date of filing: 16.01.2024
(51) Int. Cl.: H02P 3/12, F03D 7/02, H02J 9/04, H02P 3/14, H02P 3/18, H02P 3/22, H02P 9/10, H02J 3/38

(54) **METHOD FOR CONTROLLING AN ELECTRO-MECHANICAL ACTUATION SYSTEM AND ELECTRO-MECHANICAL ACTUATION SYSTEM**

(71) Applicant: Nordex Energy SE & Co. KG, 22419 Hamburg (DE)
(72) Inventor: RAVE, Christian, 22419 Hamburg (DE)
(74) Representative: Völkl Siebenson Patentanwälte - Partnerschaft mbB

(57) **Abstract**

According to an embodiment, the electro-mechanical actuator (250) of the electro-mechanical actuations system (200) is configured to be connected to a DC link intermediate circuit (220). An energy storage unit (240) is connectable to the DC link intermediate circuit via a converter (214). The converter is a bidirectional converter. The method comprises a step of providing first information (I1) which is representative of an operating mode of the electro-mechanical actuator. The operating mode can either be a first operating mode or a second operating mode. If the operating mode is the second operating mode, an activating command (CC) is generated for the converter. The activating command is configured to cause the converter to regulate at least one of the voltage and the power at the DC link intermediate circuit such that energy is transferred from the DC link intermediate circuit into the energy storage unit.

## Description

The present disclosure relates to a method for controlling an electro-mechanical actuation system of a wind turbine and to an electro-mechanical actuation system for a wind turbine. Furthermore, the present disclosure relates to a computer program, a computer-readable data carrier, a controller, and a wind turbine.

Wind turbines are widely known and are used to convert wind energy into mechanical work and subsequently into electrical energy. Among others, wind turbines may comprise one or more electro-mechanical actuators to control all or some mechanical sub-assemblies of the wind turbine, for instance, servo motors for controlling a yaw and a pitch angle of the wind turbine. The electro-mechanical actuator forms part of an actuation system which may include other electrical circuitry together with control units or modules. Efficient control of such actuators is important to ensure optimization of kinematic and dynamic behavior(s) of sub-assemblies, such as the rotor blades or the nacelle. Control of actuators also plays a vital role in effectuating emergency operations, for example, feathering of blades using drive power of the actuator(s) in order to reduce the speed of the rotor, and eventually to bring it to standstill.

Another objective of implementing control features with respect to such actuation systems is to ensure optimal energy flow (and therefore energy management) between associated devices. Particularly, when the rotational speed of the electro-mechanical actuator is reduced or an external force pushes (drives) the electro-mechanical actuator, the actuator operates in a generative mode, i.e., operates to generate electrical energy. The system must be able to handle this generated energy, otherwise the whole system cannot be controlled anymore.

There is a general need for improved control of a wind turbine, in particular during exceptional operating conditions, such as when the electro-mechanical actuator is decelerated or pushed by external forces. For example, it is desirable to efficiently use the energy generated by the electro-mechanical actuator in this case.

First, the method for controlling an electro-mechanical actuation system of a wind turbine is described.

According to an embodiment, the electro-mechanical actuator of the electro-mechanical actuation system is configured to be connected to a DC link intermediate circuit. An energy storage unit is connectable to the DC link intermediate circuit via a converter. According to an embodiment, the converter is a bidirectional converter. The method comprises a step of providing first information which is representative of an operating mode of the electro-mechanical actuator. The operating mode can either be a first operating mode or a second operating mode. If the operating mode is the second operating mode, an activating command is generated for the converter. The activating command is configured to cause the converter to regulate at least one of a voltage and a power at the DC link intermediate circuit such that energy is transferred from the DC link intermediate circuit into the energy storage unit.

By having the converter being configured to regulate the voltage and/or power at the DC link intermediate circuit so that energy is transferred from the DC link intermediate circuit into the energy storage unit, energy generated by the electro-mechanical actuator can be efficiently diverted for utilization, and the system can further be controlled. Furthermore, the energy transferred to the energy storage unit can be used later on, e.g., to power the electro-mechanical actuator.

The method described herein is, in particular, a computer-implemented method. Thus, information, like the first information is an electronic information, such as electronic data or instructions. For example, the activating command is an electrical signal and/or a digital signal which is transferable to the converter.

Herein, when information is representative of a certain quantity or certain quantities, this means, that the quantity can be extracted from the information.

The electro-mechanical actuator may be a servo motor. For example, the electro-mechanical actuator is an electric motor of the pitch system or of the yaw system of the wind turbine.

In an alternate embodiment, the electro-mechanical actuator may be a linear electro-mechanical actuator.

The converter connectable between the energy storage unit and the DC link intermediate circuit is a bidirectional converter, for example a DC/DC converter. The converter, among others, is configured to regulate the voltage and/or the power at the DC link intermediate circuit.

The first information may be determined by detection of certain parameters or depending on some measurements. For example, when it is determined that the electro-mechanical actuator is pushed in a given direction of motion by an external force, or when it is determined that the speed of the electro-mechanical actuator is reduced (or decelerated), the first information is determined or based such that the operating mode is the second operating mode. In other words, if it is determined that the electro-mechanical actuator consumes mechanical energy instead of delivering it, then the first information is determined on the basis that the electro-mechanical actuator is operating in the second operating mode.

On the other hand, when it is determined that the electro-mechanical actuator has to be accelerated or the electro-mechanical actuator has to deliver mechanical output, the first information may be determined such that the operating mode is the first operating mode.

The activating command is generated if the first information is representative of the operating mode being the second operating mode. For example, only if the first information is representative of the operating mode being second operating mode is the activation command activated. That is, the condition that the operating mode is the second operating mode may be a necessary condition for generating the activating command. It may be a sufficient condition for generating the activating command. Alternatively, however, one or more further conditions have to be met before the activating command is actually generated.

According to a further embodiment, the electro-mechanical actuator is a permanent magnet synchronous machine (PMSM) or an asynchronous machine (ASM), like a squirrel cage asynchronous machine. In particular, the electro-mechanical actuator is a motor, which may be a permanent magnet synchronous (AC) motor, permanent magnet (DC) motor, or a squirrel cage asynchronous (AC) motor.

According to a further embodiment, the first operating mode is an electrical power consuming mode of the electro-mechanical actuator. This mode is herein also referred to as "motor mode". Thus, the electro-mechanical actuator consumes electrical energy in the first operating mode. For example, electrical energy is transferred from the DC link intermediate circuit to the electro-mechanical actuator in the first operating mode in order to energize the electro-mechanical actuator, and therefore, to provide mechanical output.

According to a further embodiment, the second operating mode is an electrical power generating mode of the electro-mechanical actuator. The second operating mode may also be called "generative mode". Thus, the electro-mechanical actuator generates electrical energy in the second operating mode. The generated electrical energy may be available at the terminals of the electro-mechanical actuator for consumption by secondary circuit elements. For example, the generated electrical energy may be managed or regulated such that it may be transferred from the electro-mechanical actuator via the DC link intermediate circuit to the energy storage unit in the second operating mode.

According to a further embodiment, the method further comprises a step of providing second information which is representative of one of an actual voltage and an actual power at the DC link intermediate circuit. The second information is, for example, determined depending on measurements. For example, one or more measuring devices connected to the DC link intermediate circuit (or rails of DC link intermediate circuit) are used for determining the actual voltage and/or the actual power at the DC link intermediate circuit and the corresponding measurement signals are then used to determine the second information.

The actual voltage and/or the actual power at the DC link intermediate circuit may also be determined by other means.

In one embodiment, the one or more measuring devices are used for determining voltage and/or electric current at the DC link intermediate circuit.

According to a further embodiment, the method comprises a step of determining third information depending on the second information. The third information is an operating information for the converter. The third information is, in particular, representative of one of a DC link voltage setpoint and a DC link power setpoint.

The third information is an operating information means, in particular, the converter is operated according to the third information. Particularly, the third information may be transmitted or input to the converter. The third information may be stored or contained in the activating command, for example. When the converter is operated according to the third information, the converter attempts to regulate the voltage and/or the power at the DC link intermediate circuit to attain the DC link voltage setpoint or the DC link power setpoint, respectively.

According to a further embodiment, in the case of the second operating mode, i.e., if the first information is representative of the operating mode being the second operating mode, the third information is based on one of the following:
- the DC link voltage setpoint is lesser than the actual voltage of the DC link intermediate circuit, and
- the DC link power setpoint is different than the actual power at the DC link intermediate circuit.

In other words, the third information is determined such that or based on a condition that either the DC link voltage setpoint is below the actual voltage of the DC link intermediate circuit or the DC link power setpoint is different than (i.e., lesser than or greater than) the actual power at the DC link intermediate circuit. For example, the DC link voltage setpoint is set to be at least 5% lower than the actual voltage or the DC link power setpoint is set to be at least 5% different than the actual power. The setpoints may be predefined values or may be determined depending predefined differences to the actual values (voltage or power).

According to a further embodiment, when the converter is operated according to the third information, i.e., using the third information, at least one of the voltage and the power at the DC link intermediate circuit is regulated by the converter until one of the DC link voltage setpoint and the DC link power setpoint is attained. This is achieved by transferring energy from the DC link intermediate circuit to the energy storage unit, whereby the energy storage unit is charged up. For example, the charging is switched off as soon as the setpoint is reached, and immediately discharging starts upon demand for motoric operation.

According to a further embodiment, the method comprises a step of providing fourth information which is representative of one of a minimum predefined voltage and a reference power range at the DC link intermediate circuit. If the operating mode is the second operating mode (i.e., the first information is representative of the operating mode being the second operating mode), the activating command is only generated if a comparison between the fourth information and the second information reveals one of the following:
- the actual voltage is above the minimum predefined voltage, and
- the actual power is outside the reference power range.
The minimum predefined voltage and/or the reference power range may be determined by an optimization process considering, inter alia, rectified grid parameters and/or upper threshold values introduced below.

According to a further embodiment, an energy dissipating element is connectable to the DC link intermediate circuit. For example, the energy dissipating element is a braking resistor.

According to a further embodiment, the method further comprises a step of providing fifth information which is representative of one of an upper threshold voltage of the DC link intermediate circuit and an upper threshold power of the DC link intermediate circuit.

According to a further embodiment, if the operating mode is the second operating mode, the activating command is only generated, if the comparison between the second and the fifth information reveals one of:
- the actual voltage of the DC link intermediate circuit is below the upper threshold voltage, and
- the actual power of the DC link intermediate circuit is below the upper threshold power.

On the other hand, if the operating mode is the second operating mode and if a comparison between the second and the fifth information reveals one of
- the actual voltage of the DC link intermediate circuit is equal to or above the upper threshold voltage, and
- the actual power of the DC link intermediate circuit is equal to or above the upper threshold power,
a chopper command is generated which is configured to cause energy transfer from the DC link intermediate circuit to the energy dissipating element.

The upper threshold voltage and the upper threshold power are defined, for example, by the hardware specification so as not to damage the energy storage unit when charging it from the DC link intermediate circuit. For example, a maximum voltage of a capacitor/capacitor bank present in the DC link intermediate circuit defined by the original equipment manufacturer (OEM) can be used as the upper threshold voltage.

By way of example, the chopper command is configured to cause a switching module to guide energy from the DC-link intermediate circuit to the energy dissipating element. For example, when the switching module receives the chopper command, a switch is closed by the switching module so that electric current can flow from the DC intermediate circuit to the energy dissipating element. The energy dissipating element transforms, for example, the energy from the DC link intermediate circuit into a different form of energy, for example, heat.

According to a further embodiment, the DC link intermediate circuit is connectable to a first converter on its first side and a second converter on its second side. The DC-intermediate circuit is configured to be powered from a supply grid via the first converter. Moreover, the DC link intermediate circuit is configured to be connected to the electro-mechanical actuator via the second converter.

The first and the second converter are different from the above-mentioned bidirectional converter. The first converter may also be called a "grid side converter". The first converter is, for example, a rectifier. The second converter may also be called "motor side converter". The second converter may be a driver associated with the electro-mechanical actuator, for example, an inverter. The first converter may be an AC/DC converter and the second converter may be a DC/AC converter.

The second converter is configured to transform at least one of a voltage and a current of the DC link intermediate circuit into at least one of a voltage and a current required for driving the electro-mechanical actuator. Provision of a second converter enables precise control of the electro-mechanical actuator. Additionally, the second converter may be configured to transfer energy from the electro-mechanical actuator to the DC link intermediate circuit in order to divert energy produced by the electro-mechanical actuator into the DC link intermediate circuit.

In an embodiment, the second converter is a bi-directional converter. Considering as an example that the electro-mechanical actuator is a synchronous (AC) motor, in the first operating mode, the second converter transforms direct current (or voltage) at the DC link intermediate circuit into an alternating current (or voltage) required by the synchronous motor to provide a mechanical output.

On the other hand, in the second operating mode, the second converter (reversibly) transforms the alternating current (or voltage) generated by the motor and available at the motor terminals into a direct current (or voltage) which can be applied at the DC link intermediate circuit.

According to a further embodiment, the method comprises a step of providing sixth information which is representative of one of a rectified supply grid voltage and a grid power output.

The rectified supply grid voltage is the voltage (output) produced by the first converter out of the grid voltage that is input or supplied to the first converter.

The grid power output is the power delivered by the first converter, wherein the first converter is supplied with an input power from a supply grid, for example, an auxiliary grid of the wind turbine.

The sixth information may be determined depending on measurements. For example, a measuring device is connected to the supply grid and is used to determine the rectified supply grid voltage and/or the grid power output. In other embodiments, the rectified supply grid voltage and/or the grid power output may be determined by different means.

According to a further embodiment, if the operating mode is the second operating mode, the third information is also determined depending on the sixth information so that one of the DC link voltage setpoint is greater than the rectified supply grid voltage and the DC link power setpoint is greater than the grid power output. In other words, the DC link voltage setpoint is greater than the rectified supply grid voltage or the DC link power setpoint is greater than the grid power output.

By choosing the DC-link voltage setpoint to be greater than the rectified supply grid voltage or the DC link power setpoint to be greater than the grid power output, unintended triggering or generation of the activating command in which power is transferred from the supply grid to the electro-mechanical actuator may be avoided.

According to a further embodiment, the fourth information is determined depending on the sixth information so that the minimum predefined voltage is greater than the rectified supply grid voltage, and the reference power range excludes the grid power output. That is, the fourth information is determined such that either the minimum predefined voltage is greater than the rectified supply grid voltage or the grid power output is outside the reference power range.

Also, by choosing the minimum predefined voltage to be greater than the rectified supply grid voltage or the reference power range to exclude the grid power output, an unintended triggering or generation of the activating command in which power is transferred from the supply grid to the electro-mechanical actuator can be avoided.

According to a further embodiment, the method further comprises a step of providing seventh information which is representative of one of a nominal charging voltage and a nominal charging power of the energy storage unit. The nominal charging power and/or the nominal charging voltage of the energy storage unit may be predefined by the original equipment manufacturer, for example. The nominal charging power is the power which shall be transferred during the charging.

According to a further embodiment, the method comprises a step of providing eighth information which is representative of one of the actual charging voltage and the actual charging power of the energy storage unit. The actual charging power is the actual power transferred to the energy storage unit.

For example, the eighth information is determined depending on measurements. By way of example, a measuring device is connected to the energy storage unit and may be used to determine the actual charging voltage and/or the actual charging power of the energy storage unit.

According to a further embodiment, if the operating mode is the second operating mode, the activating command is only generated if a comparison between the seventh and the eighth information reveals one of:
- the actual charging voltage of the energy storage unit does not exceed the nominal charging voltage by more than a critical voltage threshold, and
- the actual charging power of the energy storage unit does not exceed the nominal charging power by more than a critical power threshold.

The critical voltage threshold and/or the critical power threshold may be predefined thresholds. For example, they are at least 2% and at most 15% greater than the corresponding nominal values.

According to a further embodiment, if the operating mode is the second operating mode and if the comparison between the seventh and the eighth information reveals one of:
- the actual charging voltage of the energy storage unit exceeds the nominal charging voltage by more than the critical voltage threshold, and
- the actual charging power of the energy storage exceeds the nominal charging power by more than the critical power threshold,
the above-mentioned chopper command is generated which is configured to cause transfer of energy from the DC link intermediate circuit to an energy dissipating element.

According to a further embodiment, if the operating mode is the first operating mode (i.e., if the first information is representative of the operating mode being the first operating mode) and if a comparison between the seventh and the eighth information reveals one of
- the actual charging voltage of the energy storage unit is above the nominal charging voltage, and
- the actual charging power of the energy storage unit is above the nominal charging power,
a discharging command is generated for the converter. The discharging command is configured to cause the converter to regulate at least one of a voltage and a power at the DC link intermediate circuit such that energy is transferred from the energy storage unit to the electro-mechanical actuator via the DC link intermediate circuit.

For example, the discharging command is control signal which may be transferred to the converter. The discharging command may comprise the third information.

According to a further embodiment, for the first operating mode, the third information is determined based on or such that one of:
- the DC link voltage setpoint is above the actual voltage of the DC link intermediate circuit, and
- the DC link power setpoint is different from the actual power at the DC link intermediate circuit.
Thus, when the converter is operated according to the third information, at least one of the voltage and the power in the DC link intermediate circuit is regulated by the converter, until one of the DC link voltage setpoint and the DC link power setpoint, is attained, by transferring energy from the energy storage unit to the electro-mechanical actuator via the DC link intermediate circuit, thus discharging the energy storage unit.

Next, the computer program, the computer-readable data carrier and the controller are specified.

According to an embodiment, the computer program comprises instructions which, when the program is executed by a controller, cause the controller to carry out the method of any one of the embodiments described herein.

According to an embodiment, the computer-readable data carrier has the computer program stored thereon.

According to an embodiment, the controller comprises means for executing the method according to any of the embodiments described herein. Particularly, the controller may comprise a processor for executing the method. The controller may be a separate control device (hardware) which is, for example, communicatively connected or connectable to the controller or it may be a software function. The controller may comprise one or more inputs for receiving information, like measurement signals, and one or more outputs for providing output information, like the activating command, and optionally also the third information, the chopper command and/or the discharging command.

Next, the electro-mechanical actuation system according to some embodiments is described. The electro-mechanical actuation system is, in particular, configured to execute the method according to any of the embodiments described herein. Therefore, all features disclosed in connection with the method are also disclosed for the electro-mechanical actuation system and vice versa.

According to an embodiment, the electro-mechanical actuation system for a wind turbine comprises a first converter connected to a supply grid, a DC-link intermediate circuit connected on its first side to the first converter and configured to be powered from a supply grid via the first converter. The system further comprises a converter, which is bidirectional. The system also comprises an electro-mechanical actuator and an energy storage unit. The energy storage unit is connected to the DC link intermediate circuit via the converter. Moreover, the system comprises the controller according to any of the embodiments described herein. The electro-mechanical actuator is configured to be connected to the DC link intermediate circuit. The controller is configured to control the converter according to the activating command, and optionally also according to the third information and/or the discharging command. The converter is configured to regulate at least one of a voltage and a power at the DC link intermediate circuit upon reception of the activating command such that energy is transferred from the DC link intermediate circuit into the energy storage unit.

According to a further embodiment, the bidirectional converter is a DC/DC converter.

According to a further embodiment, a second converter is connected to a second side of the DC link intermediate circuit. In particular, the second converter connects the second side of the DC link intermediate circuit to the electro-mechanical actuator.

According to a further embodiment, the system further comprises an energy dissipating element, particularly a braking resistor. The energy dissipating element is connected to the DC link intermediate circuit via a switching module. The switching module is communicatively coupled to the controller. Thus, the switching module can receive the chopper command from the controller. The switching module is configured to change the position of a switch in order to close or open a current path from the DC link intermediate circuit to the energy dissipating element so that, upon reception of the chopper command as described herein above, energy can be transferred from the DC link intermediate circuit to the energy dissipating element.

According to a further embodiment, the system further comprises a first measuring device which is connected to the DC link intermediate circuit and configured to measure at least one of an actual voltage and an actual power of the DC link intermediate circuit. The first measuring device is, in particular, communicatively coupled to the controller in order to provide the controller with the measurement signals.

According to a further embodiment, the system further comprises a second measuring device which is connected to the energy storage unit and configured to measure at least one of an actual charging voltage and an actual charging power of the energy storage unit. The second measuring device is, in particular, communicatively coupled to the controller in order to provide the controller with the measurement signals.

According to a further embodiment, the system further comprises a third measuring device connected to the supply grid and configured to measure at least one of an actual supply grid voltage and an actual supply grid power. From this, the rectified supply grid voltage and/or the grid power output can be determined. The third measuring device is, in particular, communicatively coupled to the controller in order to provide the controller with the measurement signals.

In an alternate embodiment, the rectified supply grid voltage and/or the grid power output can be measured directly by the third measuring device.

According to some embodiments, other parameters including, but not limited to an actual temperature of the energy storage unit, an actual speed of the electro-mechanical actuator, a desired speed of the electro-mechanical actuator; an actual torque or force of the electro-mechanical actuator; a desired torque or force of the electro-mechanical actuator; a sensor signal, in particular a sensor signal indicating at least one of a wind speed, an adverse condition such as, but not limited to a grid fault and a grid failure condition; and a control signal, in particular a control signal requesting at least one of an emergency control action and a fast movement of the electro-mechanical actuator, may be measured using auxiliary measuring devices. These and similar parameters may allow the generated voltage and/or power in the second operating mode to be regulated for effectively managing the energy/power within the actuation system.

Next, the wind turbine is specified.

According to an embodiment, the wind turbine comprises the electro-mechanical actuation system according to any of the embodiments described herein. Particularly, the electro-mechanical actuator of the electro-mechanical actuation system forms part of a yaw system or a pitch system of the wind turbine.

Hereinafter, the method for operating an electro-mechanical actuator, the electro-mechanical actuation system and the wind turbine will be explained in more detail with reference to the drawings on the basis of exemplary embodiments. The accompanying figures are included to provide a further understanding. In the figures, elements of the same structure and/or functionality may be referenced by the same reference signs. It is to be understood that the embodiments shown in the figures are illustrative representations and are not necessarily drawn to scale. Insofar as elements or components correspond to one another in terms of their function in different figures, the description thereof is not repeated for each of the following figures. For the sake of clarity, elements might not appear with corresponding reference symbols in all figures.

Figure 1 shows an exemplary embodiment of the wind turbine,

Figures 2, 4, 5 and 6 each illustrate an exemplary embodiment of the electro-mechanical actuation system for a wind turbine in different situations,

Figure 3 shows a flow chart of an exemplary embodiment of the method for controlling an electro-mechanical actuation system of a wind turbine.

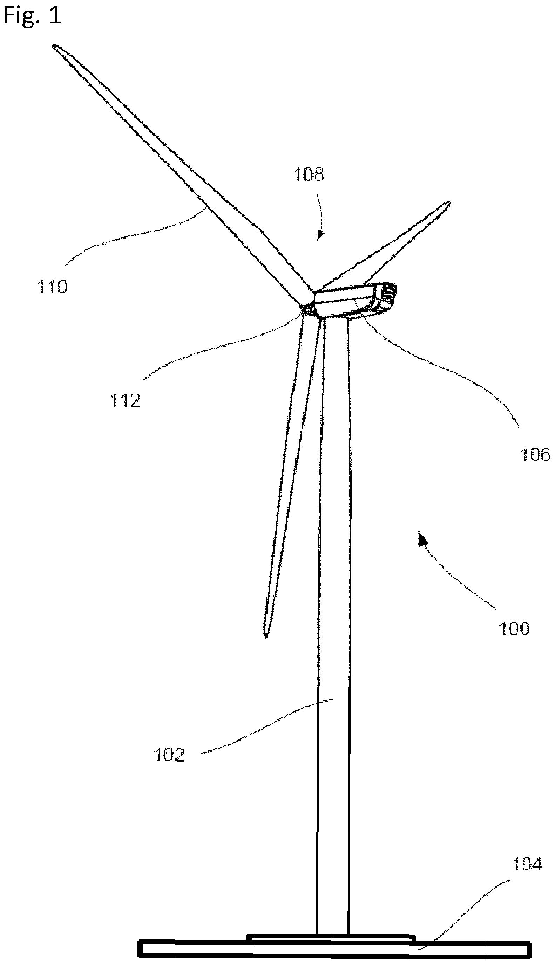

Figure 1 shows a schematic view of a wind turbine 100, which comprises a tower 102. The tower 102 is fixed to the ground by means of a foundation 104. At one end of the tower 102, opposite to the ground, a nacelle 106 is rotatably mounted. The nacelle 106, for example, comprises a generator (not shown) which is coupled to a rotor 108 via a rotor shaft (not shown). The rotor 108 comprises one or more (wind turbine) rotor blades 110, which are movably arranged on a rotor hub 112.

During operation, the rotor 108 is set in rotation by an air flow, in particular aerodynamic forces resulting from the interaction of wind with the blades. This rotational movement is transmitted to the generator via the rotor shaft, with or without a gearbox. The generator converts the mechanical energy of the rotor 108 into electrical energy.

To control the rotational speed of the rotor 108, the rotor blades 110 can be adjusted by rotating them about their longitudinal axis. This rotation is performed by a pitch actuation and control system, comprising one or more pitch drives. Alternatively, or in addition, the rotational speed or other characteristics of the rotor 108 can be controlled by rotating the entire nacelle 106, thereby adjusting the relative angle between the rotor main axis and the direction of the wind. The rotation of the nacelle 106 is done by one or more yaw drives. This rotation of the nacelle and the rotor into the direction of wind or away from the wind is performed by a yaw actuation system, comprising one or more yaw drives. The pitch and yaw actuation systems also facilitate the rotor to be brought into reduced power mode or standstill during extreme/adverse situations, for example, during wind gusts, failure of components, etc.

In an embodiment, the actuation system 200 is communicatively associated with an actuation controller 210. For example, the supply grid 232, the energy storage unit 240, the converter system 205 and the electro-mechanical actuator 250 are communicatively associated with the actuation controller 210.

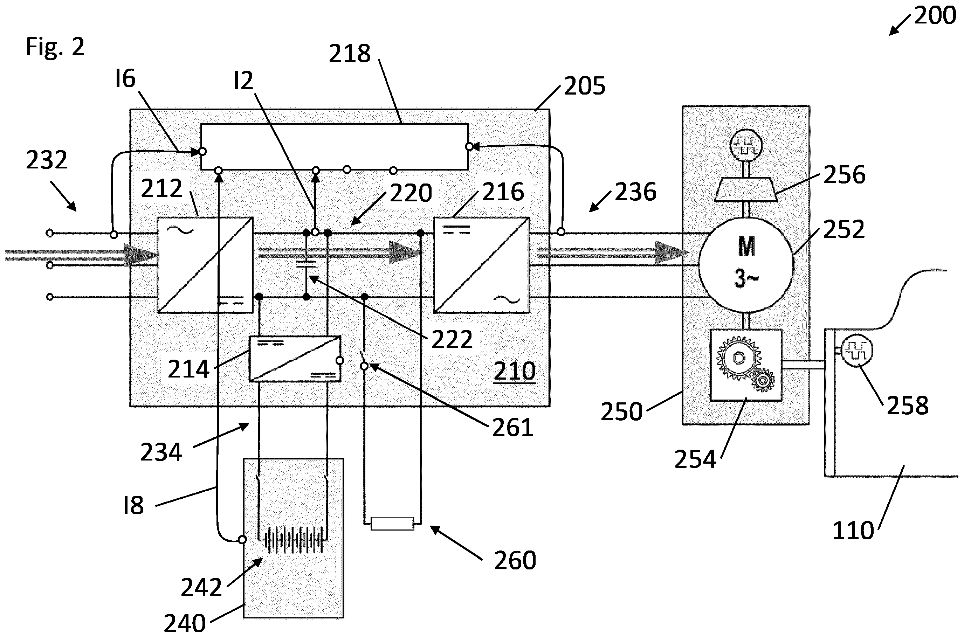

In an exemplary embodiment, the actuation controller 210 is a pitch actuation controller that may be externally or internally coupled to the converter system 205. The actuation controller 210 may activate a specific circuit part or operating routine, for example, the controller 218 indicated in Figures 2 and 4 to 6. In such a situation, the controller 218 will control the converter 214 to perform desired functions, which will be explained in the upcoming paragraphs.

In an embodiment, the actuation controller 210 may interact with the turbine (main) controller (not shown) of the wind turbine.

Figure 2 shows, in a schematic manner, an exemplary embodiment of an electro-mechanical actuation system 200 of the wind turbine 100 of figure 1. This actuation system 200 may be used for the pitch control or the yaw control or both. The actuation system 200 comprises an electro-mechanical actuator 250.

In the following, a pitch actuation system comprising control features is described as an example for the actuation system 200. An electro-mechanical actuator 250 forms part of the pitch actuation system, the electro-mechanical actuation system 200 is associated with a pitch controller 210, and an energy storage unit 240 corresponds to a pitch energy storage unit. Nonetheless, the disclosed actuation system 200 may also be implemented as a part of a yaw system or as a part of any another electro-mechanical actuation system of the wind turbine 100. Hence, the element 210 is referred to as actuation controller 210.

The actuation system 200 comprises a converter system 205 having the pitch controller 210 that interconnects a supply grid (not shown) with the energy storage unit 240 and the electro-mechanical actuator 250. The converter system 205 comprises a first converter 212, a bidirectional converter 214 and a second converter 216. The second converter 216 is, for example, an inverter. The first converter 212, the bidirectional converter 214 and the second converter 216 are interconnected by means of a DC link intermediate circuit 220 (interchangeably referred to as "DC link" throughout for simplicity). In an embodiment, the inverter 216 may be optional depending on the type of electro-mechanical actuator 250 employed in the actuation system 200. For instance, an electro-mechanical actuator 250 such as a DC motor may be configured to be powered from the DC link 220 directly without the need of an inverter 216. Thus, the electro-mechanical actuator 250 is configured to be powered from the DC link 220, with or without an inverter 216. Further, in addition to two respective power rails, the DC link intermediate circuit 220 comprises one or more DC link capacitors 222.

The first converter 212 is configured as an AC/DC converter, for example, as a unidirectional or a bi-directional AC/DC converter. In particular, it may be a full or half-wave rectifier circuit rectifying a three-phase AC voltage received from a supply grid input 232 into a corresponding DC output voltage provided to the DC link capacitor 222. For example, for a grid voltage of an auxiliary supply grid of the wind turbine 100 having a root mean square (RMS) voltage of 400 V, a DC link voltage of approximately 565 V at the DC link capacitor 222 may be obtained by operating the first converter 212. Alternatively, an actively controlled rectifier circuit may be used, e.g., in case higher power or better control is required.

Note that in absence of further voltage sources, the first converter 212 may effectively control the DC link voltage, and that, in case of a simple rectifier, the DC link voltages on its output side is correlated directly to the AC input voltage on its input side.

The converter 214 is configured, for example, as a bidirectional DC/DC converter. This means that the converter 214 may take a voltage provided from the DC link intermediate circuit 220 and convert it into appropriate voltage for charging the energy storage unit 240. Inversely, the converter 214 can convert a discharge voltage provided by the energy storage unit 240 to an appropriate DC link voltage for the DC link intermediate circuit 220. For this purpose, the converter 214 may comprise one or more step-up (also referred as boost converters) and/or step-down converters.

For example, the voltage provided at an energy storage terminal 234 is lower than the DC voltage provided by the first converter 212 to the DC link intermediate circuit 220. Accordingly, the bidirectional converter 214 may comprise a step-down converter or serve as a step-down converter to convert the voltage of the intermediate circuit 220 into a lower voltage for charging one or more storage elements of the energy storage unit 240. In the depicted example, a number of battery cells 242 are used to store electrical energy provided by the bidirectional converter 214. However, in another embodiment, a number of so-called supercapacitors or ultracapacitors may be provided as storage elements of the energy storage unit 240.

As depicted in Figure 2, during a normal operation of the wind turbine 100, the converter system 205 receives energy from the supply grid input 232 and uses it to provide operating energy to the inverter 216 and the actuator 250 connected thereto. For example, this operating mode of the electro-mechanical actuator is herein called first operating mode or motor mode, respectively.

In the presented example, the second converter 216 converts the DC link voltage provided by the DC link intermediate circuit 220 into a three-phase AC voltage and provides it at respective terminals 236 of the electro-mechanical actuator 250, for example, three phase motor terminals of a servo motor. In the described example, a permanent magnet synchronous motor (PMSM), which is typically an AC motor, is used. PMSM may be, for example, an integrated permanent magnet motor (IPM) or a surface permanent magnet motor (SPM).

However, other motor types, such as squirrel cage asynchronous (AC) motors, permanent magnet DC motors (like brushless and brushed DC motors) may be employed.

In an alternate embodiment, an entirely different type of an actuator, such as a linear actuator may be employed. Considering the example of a servo motor 252, a motor axis of the motor 252 is connected via a gearbox 254 to each of the rotor blades 110 to control its pitch angle.

In the presented example, a pitch angle sensor 258 provides respective control signals back to a control circuit 256 of the electro-mechanical actuator 250. The pitch angle sensor 258 may be, for example, an encoder associated with the electro-mechanical actuator 250.

The control circuit 256 may analyze the control signals received from the sensor 258 to determine a current pitch angle, pitching speed or the like. In other embodiments, corresponding control signals may be provided back directly to the pitch controller 210 for direct control of the servo motor 252 through the second converter 216. Similarly, the control circuit 256 or the actuation (pitch) controller 210 may receive signals corresponding to measurement of certain parameters, including, but not limited to present voltage and current of the servo motor 252. In some embodiments, other sensors such as, but not limited to motor shaft encoders (speed and rotational angle or position) may be used. Alternately, sensor less controllable motors may be used.

As can be further seen in figure 2, the actuation system 200 comprises a controller 218, also referred to as "boost controller". The controller 218 comprises, for example, a processor configured to perform calculations and process electronic data. The controller 218 comprises several inputs via which it receives second information I2, sixth information I6 and eighth information I8.

The second information I2 is representative of the actual voltage (Vₐ) or the actual power (Pₐ) at the DC link intermediate circuit 220 and is, for example, determined based on measurements taken with help of a measuring device (not explicitly shown).

The sixth information I6 is representative of a rectified supply grid voltage (V_{g}) or a grid power output (P_{g}). Also, this information I6 may be determined depending on measurements taken with the help of a measuring device, which is not explicitly shown.

The eighth information I8 is representative of an actual charging voltage (Vᵤ) or an actual charging power (Pᵤ) of the energy storage unit 240. Also, for determining the eighth information I8, measurements taken with the help of a measuring device, which is not explicitly shown, may be used.

The controller 218 is communicatively connected to the bidirectional converter 214 in order to supply the bidirectional converter 214 with control commands. Moreover, the controller 218 is communicatively connected to a switching module 261 in order to supply the switching module 261 with control commands. The communication lines to the converter 214 and the switching module 261 are not explicitly shown in figure 2.

In addition, the controller 218 may be communicatively connected to the supply grid input 232 terminals, the DC link 220, terminals 236 of the electro-mechanical actuator 250, and the terminals 234 of the energy storage unit 240. The controller 218 is configured to receive input signals, for example, measurement signals from measuring devices and/or sensors associated with the system 200 or outside the system 200.

In one embodiment, the controller 218 may be configured to interact with main controller or turbine controller (not shown) of the wind turbine.

The switching module 261 comprises a switch which is configured to electrically connect and disconnect the DC link intermediate circuit 220 to and from an energy dissipating element 260, respectively. The energy dissipating element 260 may be a braking resistor. The controller 218 is configured to provide a chopper command to the switching module 261 in order to close the switch so that current from the DC link intermediate circuit 220 flows through the braking resistor 260 where it is transformed into heat.

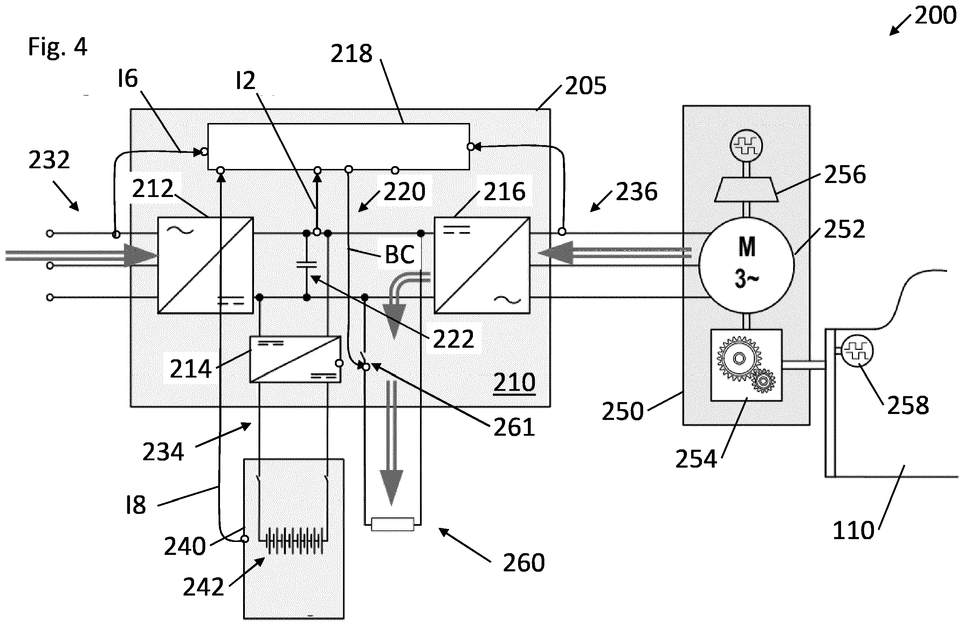

Figure 4 shows the same actuation system 200 as Figure 2 but now in a different situation where the electro-mechanical actuator 250 generates electrical energy instead of consuming the electrical energy. For example, if the electro-mechanical actuator is a motor, it may operate in a reverse mode i.e., in a generative mode where it consumes mechanical energy to generate electrical energy, similar to a generator. This can happen, for example, when external loads acting on the rotor blade 110 pushes or turns the rotor blade 110 faster than intended or if the speed, with which the pitch angle of the rotor blade 110 is changed, decreases (also known as deceleration of the blades). In one embodiment, if the electro-mechanical actuator is associated with a braking function, then the electrical energy may be generated from the associated braking. This operating mode of the electro-mechanical actuator 250 is herein called second operating mode or generative mode, respectively.

In this second operating mode, the controller 218, under a given condition, may generate a chopper command BC which is sent to the switching module 261 as shown in figure 4. Upon reception of the chopper command BC, the switching module 261 closes the switch and energy generated by the electro-mechanical actuator 250 is transformed into heat in the braking resistor 216 as indicated in Figure 4. The second converter 216 which essentially is a bi-directional converter transforms the incoming electrical energy into a suitable form. For example, an incoming alternating current (AC) from the terminals 236 may be transformed into direct current (DC) at terminals of the braking resistor 260 by the second converter 216. The actuation controller 210 may continuously monitor the chopper function by regulating the chopper command BC based on several parameters and input signals.

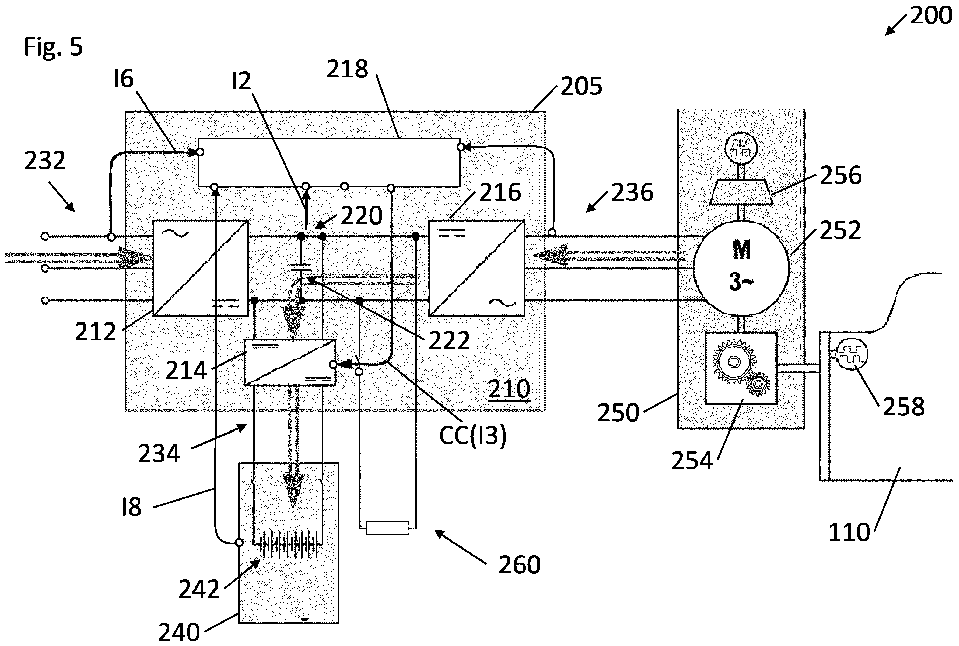

Figure 5 shows the actuation system 200 in a situation where the electro-mechanical actuator 250 is again in the second operating mode, i.e., it generates electrical energy, but now the energy is managed such that it is transferred into the energy storage unit 240 via the bidirectional converter 214. For this purpose, the controller 218 generates an activating command CC comprising the third information I3 or determined from (or on the basis of) the third information I3 as it is depicted in figure 5. This activating command CC is configured to cause the bidirectional converter 214 to regulate at least one of a voltage and a power at the DC link intermediate circuit 220 such that energy is transferred from the DC link intermediate circuit 220 into the energy storage unit 240.

In one embodiment, the controller 218 calculates or determines the setpoints for voltage Vₛ or power Pₛ to be applied at the DC link intermediate circuit 220. As described previously, the voltage setpoint Vₛ or the power setpoint Pₛ may be contained in the third information I3 or the third information I3 may be derived on the basis of voltage setpoint Vₛ or the power setpoint Pₛ. Further, the conditions necessary to calculate or determine (by the controller 218) the third information I3 representative of either the voltage setpoint Vₛ or the power setpoint Pₛ are described previously. The controller 218, upon the calculation or determination of the relevant setpoint, transfers the setpoint information (or command) to the converter 214. The converter 214 comprising the hardware and control logic sets the voltage according to setpoint voltage Vₛ or the power according to the setpoint power Pₛ at the DC link 220.

According to an embodiment, the converter 214, based on the voltage setpoint Vₛ or the power setpoint Pₛ (information or command) received from the controller 218, regulates at least one of the voltage and the power at the DC link intermediate circuit 220 until either the voltage setpoint Vₛ or the power setpoint Pₛ is attained at the DC link 220. This may be attained by converter 214 causing transfer of energy from the DC link intermediate circuit 220 to the energy storage unit 240 which results in charging of the energy storage unit 240. In an embodiment, this operation may be referred to as a damping function of the actuation system 200.

In one embodiment, the controller 218 may be associated with a memory (not shown) which stores a plurality of voltage setpoint Vₛ or power setpoint Pₛ values (or data), for example, based on historical data of various voltage and power values. For example, the historical data may be representative of actual voltage Vₐ or actual power Pₐ at the DC link 220 that corresponds to given operating characteristic(s) of the electro-mechanical actuator 250, for example, speed of the electro-mechanical actuator 220. In the event of malfunction with respect to measurement of relevant voltage and/or power, the controller 214 may still use historical data to facilitate the converter 214 to set the voltage or power setpoint at the DC link 220.

In one embodiment, the setpoint values required to generate the third information I3 and to generate the activating command CC may be stored in look-up tables.

In another embodiment, the controller 218 may estimate or approximate the voltage or power setpoint value based on other parameters or characteristics, for example, speed of the electro-mechanical actuator 220 operating in generative mode or voltage and/or power at the terminals 236.

In an embodiment, once the voltage setpoint Vₛ or the power setpoint Pₛ is attained at the DC link 220, the controller 218 may fetch a corresponding feedback signal from the DC link 220.

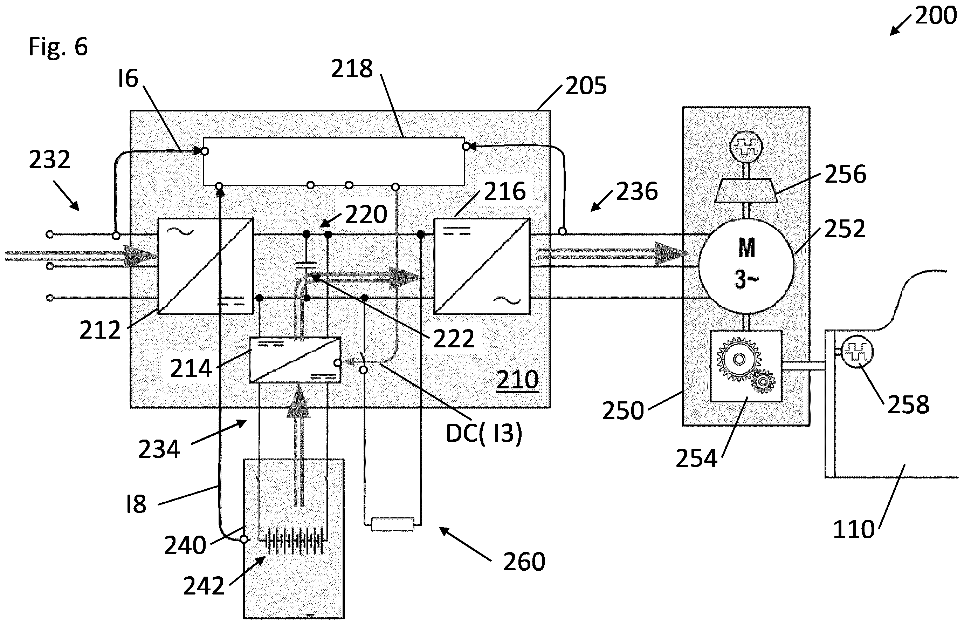

Figure 6 shows a situation where the electro-mechanical actuator 250 is back in the first operating mode, i.e., it consumes electrical energy. However, the energy is not extracted from the supply grid but from the energy storage unit 240. This may be in the case of emergency situations, for example, during grid outage or grid fault ride-through.

In order to achieve this, the controller 218 generates a discharging command DC (based on comparison of actual charging voltage or actual charging power of the energy storage unit 240, and nominal charging voltage or nominal charging power of the energy storage unit 240) which is input to the bidirectional converter 214. The discharging command DC comprises third information I3. Upon reception of the discharging command DC, the bidirectional converter 214 regulates the voltage and/or the power at the DC link intermediate circuit 220 such that energy is transferred from the energy storage unit 240 to the DC-link intermediate circuit 220 and from there to the actuator 250. In other words, the energy storage unit 240 is discharged to power the electro-mechanical actuator 250 to perform emergency actuation, for example, emergency pitching, feathering, and so on. In such a scenario, the third information I3 is determined such that either the DC link voltage setpoint Vₛ is above the actual voltage Vₐ of the DC link intermediate circuit 220, or the DC link power setpoint Pₛ is different from the actual power Pₐ at the DC link intermediate circuit 220.

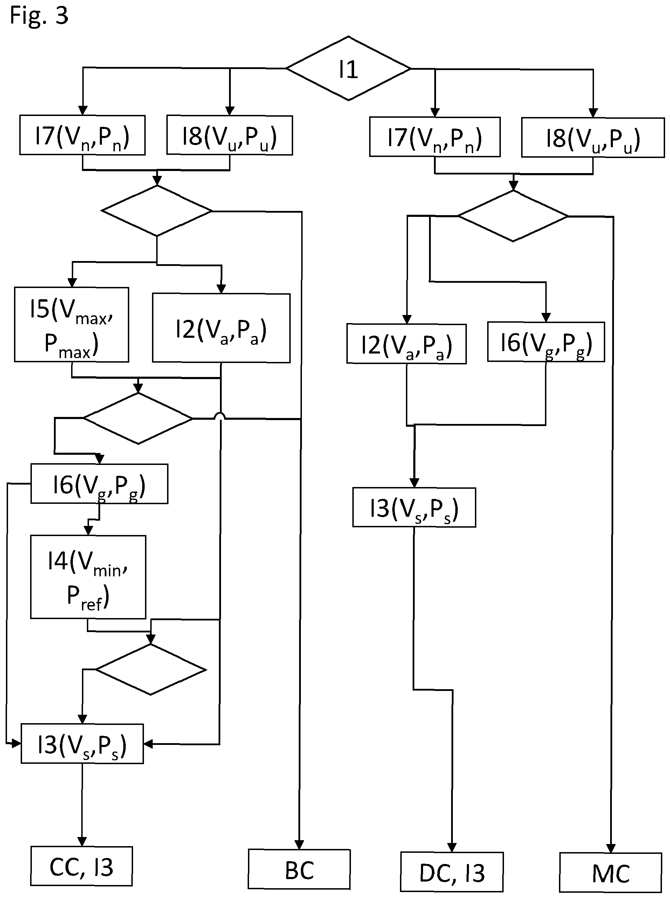

Figure 3 shows a method for controlling the actuation system 200 described in connection with the figures 2, and 4 to 6. Particularly, the method enables operation of the actuation system 200 such that the different situations as indicated in figures 2 and 4 to 6 are realized.

In the method, first information I1 is provided. The first information I1 is representative of the operating mode of the electro-mechanical actuator 250, e.g., whether it is in the first operating mode or in the second operating mode. If the first information I1 is representative of the first operating mode, the right side of the flow chart is executed and, if the first information I1 is representative of the second operating mode, the left side of the flow chart is executed.

First, the left side of the flow chart is described. The method then comprises a step of providing seventh information I7 and a step of providing the above-mentioned eighth information I8. The seventh information I7 is representative of a nominal charging voltage Vₙ or a nominal charging power Pₙ of the energy storage unit 240. For example, these numbers are provided by the manufacturer of the energy storage unit 240. In an embodiment, the nominal charging power Pₙ may be dependent on the nominal charging voltage Vₙ.

The eighth information I8 is representative of the actual charging voltage Vᵤ or the actual charging power Pᵤ of the energy storage unit 240. In an embodiment, the actual charging power Pᵤ may be dependent on the actual charging voltage Vᵤ.

The information I7, I8 are then compared. If the comparison reveals that if either the actual charging voltage Vᵤ exceeds the nominal charging voltage Vₙ by more than a critical voltage threshold or that the actual charging power Pᵤ of the energy storage unit 240 exceeds the nominal charging power Pₙ by more than a critical power threshold, the above-mentioned chopper command BC is generated by the controller 218 with the consequence that energy is transferred into the energy dissipating element 260 as described in connection with Figure 4. This way, the voltage or power generated by the actuator 250 in the second operating mode is directed towards the dissipating element 260 which is necessary to limit a rise in further voltage or power in the DC link intermediate circuit 220. This is crucial from safety point of view and is executed by the controller 218 via the switching module 261.

On the other hand, if the comparison between the seventh information I7 and the eighth information I8 reveals that either the actual charging voltage Vᵤ of the energy storage unit 240 does not exceed the nominal charging voltage Vₙ by more than the critical voltage threshold, or the actual charging power Pᵤ of the energy storage unit 240 does not exceed the nominal charging power Pₙ by more than the critical power threshold, a next step is executed, in which fifth information I5 and the above-mentioned second information I2 are compared.

The fifth information I5 is representative of one of an upper threshold voltage Vₘₐₓ of the DC link intermediate circuit 220 and an upper threshold power Pₘₐₓ of the DC link intermediate circuit 220. These upper threshold values could also be provided by the manufacturer of the DC link intermediate circuit 220.

If the comparison between the fifth information I5 and the second information I2 reveals that the actual voltage Vₐ of the DC link intermediate circuit 220 extracted from the second information I2 is equal to or above the upper threshold voltage Vₘₐₓ or the actual power Pₐ of the DC link intermediate circuit 220 is equal to or above the upper threshold power Pₘₐₓ, the chopper command BC is again generated as described in connection with Figure 4. This step is crucial from safety point of view and is executed by the controller 218 via the switching module 261.

However, if the comparison between the fifth information I5 and the second information I2 reveals that the actual voltage Vₐ of the DC link intermediate circuit 200 is below the upper threshold voltage Vₘₐₓ or the actual power Pₐ of the DC link intermediate circuit 220 is below the upper threshold power Pₘₐₓ, further steps are executed.

First of all, the second information I2 is compared with fourth information I4. The fourth information I4 is representative of one of a minimum predefined voltage Vₘᵢₙ and a reference power range P_{ref} at the DC link intermediate circuit 220. If the comparison between the second information I2 and the fourth information I4 reveals that the actual voltage Vₐ is above the minimum predefined voltage Vₘᵢₙ or the actual power Pₐ is above the reference power range P_{ref}, the third information I3 is determined.

The third information I3 is an operating information and is representative of one of the DC link voltage setpoint Vₛ and the DC link power setpoint Pₛ as explained previously. The third information I3 is determined depending on the second information I2 and also depending on sixth information I6, such that the DC link voltage setpoint Vₛ is below the actual voltage Vₐ but above the rectified grid voltage V_{g}. Alternatively, the third information I3 is determined such that the DC link power setpoint Pₛ is below the actual power Pₐ but above the grid power output P_{g}. Note that also the minimum predefined voltage Vₘᵢₙ is greater than rectified supply grid voltage V_{g} and/or the minimum predefined power Pₘᵢₙ is greater than the grid power output P_{g}.

The bidirectional converter 214 is then operated according to the third information I3 so that the bidirectional converter 214 regulates at least one of the voltage and the power of the DC link intermediate circuit 220 until one of the DC link voltage setpoint Vₛ and the DC link power setpoint Pₛ is attained. Thereby energy is transferred from the DC link intermediate circuit 220 to the energy storage unit 240 by which the energy storage unit 240 is charged up. This situation is illustrated in figure 5.

In one embodiment, activating command CC may be continuous or discrete (intermittent). For example, the activating command CC may remain ON or turned OFF based on the operating modes.

Now the right side of the flow chart of figure 3 is described. Hence, the first information I1 is representative of the electro-mechanical actuator 250 being in the first operating mode.

First, a comparison between the seventh information I7 and the eighth information I8 is executed. If this comparison reveals that the actual charging voltage Vᵤ of the energy storage unit 240 is above the nominal charging voltage Vₙ or the actual charging power Pᵤ of the energy storage unit 240 is above the nominal charging power Pₙ, the third information I3 is determined depending on the second I2 and the sixth information I6. Thereby, the third information I3 is determined such that the DC link voltage setpoint Vₛ is above the actual voltage Vₐ of the DC link intermediate circuit 220 or the DC link power setpoint Pₛ is different than the actual power Pₐ of the DC link intermediate circuit. The DC link voltage setpoint Vₛ is also set to be above the rectified supply grid voltage V_{g} or the DC link power setpoint is set to be above the grid power output P_{g}.

In an embodiment, the DC link power setpoint Pₛ being different than the actual power Pₐ of the DC link intermediate circuit 220 throughout the description refers to a condition where the power setpoint Pₛ is either higher than the actual power Pₐ, or a condition where the power setpoint Pₛ is lesser than the actual power Pₐ. Either of these conditions may depend on the respective voltage values.

The third information I3 is then used to operate the bidirectional converter 214. The bidirectional converter 214 accordingly regulates the voltage and/or the power in the DC link intermediate circuit until one of the DC link voltage setpoint Vₛ and the DC link power setpoint Pₛ is attained. Thereby, energy is transferred from the energy storage unit 240 to the electro-mechanical actuator 250 via the DC link intermediate circuit 220, thus discharging the energy storage unit 240. This situation is shown in figure 6.

If, on the other hand, the comparison between the seventh I7 and the eighth I8 information with the actuator 250 being in the first operating mode reveals that the actual charging voltage Vᵤ of the energy storage unit 240 is below or equal to the nominal charging voltage Vₙ of the energy storage unit 240 or the actual charging power Pᵤ of the energy storage unit 240 is below or equal to the nominal charging power Pₙ of the energy storage unit 240, a control command MC is generated which causes the powering of the electro-mechanical actuator 250 with energy from the supply grid via the DC link intermediate circuit 220. This is the situation shown in figure 2.

The invention described herein is not limited by the description in conjunction with the exemplary embodiments. Rather, the invention comprises any new feature as well as any combination of features, particularly including any combination of features in the patent claims, even if said feature or said combination per se is not explicitly stated in the patent claims or exemplary embodiments.

### List of Reference Symbols

- 100: wind turbine
- 102: tower
- 104: foundation
- 106: nacelle
- 108: rotor
- 110: rotor blade
- 112: rotor hub

- 200: actuation system
- 205: converter system
- 210: actuation controller
- 212: first converter
- 214: bidirectional converter
- 216: second converter
- 218: controller
- 220: DC link intermediate circuit
- 222: DC link capacitor
- 232: supply grid input
- 234: energy storage terminals
- 236: Terminals
- 240: energy storage unit
- 242: battery storage cell
- 250: electro-mechanical actuator
- 252: servo motor
- 254: gearbox
- 256: control circuit
- 258: pitch angle sensor

- I1: first information
- I2: second information
- I3: third information
- I4: fourth information
- I5: fifth information
- I6: sixth information
- I7: seventh information
- I8: eighth information
- CC: activating command
- BC: chopper command
- DC: discharging command
- MC: control command

- Vₐ: actual voltage at the DC link intermediate circuit
- Pₐ: actual power at the DC link intermediate circuit
- Vₛ: DC link voltage setpoint
- Pₛ: DC link power setpoint
- Vₘᵢₙ: minimum predefined voltage
- P_{ref}: reference power range
- Vₘₐₓ: upper threshold voltage
- Pₘₐₓ: upper threshold power
- V_{g}: rectified supply grid voltage
- P_{g}: grid power output
- Vₙ: nominal charging voltage
- Pₙ: nominal charging power
- Vᵤ: actual charging voltage
- Pᵤ: actual charging power

## Claims

1. Method for controlling an electro-mechanical actuation system (200) of a wind turbine (100), wherein
- the electro-mechanical actuation system (200) comprises an electro-mechanical actuator (250) which is configured to be connected to a DC link intermediate circuit (220), and
- an energy storage unit (240) is connectable to the DC link intermediate circuit (220) via a converter (214), the converter (214) being a bidirectional converter,
- the method comprises:
- providing first information (I1) which is representative of an operating mode of the electro-mechanical actuator (250), wherein the operating mode can either be a first operating mode or a second operating mode; and, if the operating mode is the second operating mode,
- generating an activating command (CC) for the converter (214) which is configured to cause the converter (214) to regulate at least one of a voltage and a power at the DC link intermediate circuit (220) such that energy is transferred from the DC link intermediate circuit (220) into the energy storage unit (240).

2. Method according to claim 1, wherein
- the first operating mode is an electrical power consuming mode of the electro-mechanical actuator, and the second operating mode is an electrical power generating mode of the electro-mechanical actuator,
the method further comprising:
- providing second information (I2) which is representative of one of an actual voltage (Vₐ) and an actual power (Pₐ) at the DC link intermediate circuit (220),
- determining third information (I3) depending on the second information (I2), wherein the third information (I3) is an operating information for the converter (214) and is representative of one of a DC link voltage setpoint (Vₛ) and a DC link power setpoint (Pₛ), wherein, for the second operating mode,
- the third information (I3) is based on one of the following:
• the DC link voltage setpoint (Vₛ) is lesser than the actual voltage (Vₐ) of the DC link intermediate circuit (220), and
• the DC link power setpoint (Pₛ) is different than the actual power (Pₐ) at the DC link intermediate circuit (220).

3. Method according to claim 2, wherein,
- when the converter (214) is operated according to the third information (I3), at least one of the voltage and the power at the DC link intermediate circuit (220) is regulated by the converter (214) until one of the DC link voltage setpoint (Vₛ) and the DC link power setpoint (Pₛ) is attained, by transferring energy from the DC link intermediate circuit (220) to the energy storage unit (240), thus charging the energy storage unit (240) up.

4. Method according to claim 2 or 3, further comprising
- providing fourth information (I4) which is representative of one of a minimum predefined voltage (Vₘᵢₙ) and a reference power range (P_{ref}) at the DC link intermediate circuit (220), wherein
- if the operating mode is the second operating mode, the activating command (CC) is only generated if a comparison between the fourth information (I4) and the second information (I2) reveals one of the following:
• the actual voltage (Vₐ) is above the minimum predefined voltage (Vₘᵢₙ), and
• the actual power (Pₐ) is outside the reference power range (P_{ref}).

5. Method according to any one of claims 2 to 4, wherein
- an energy dissipating element (260) is connectable to the DC link intermediate circuit (220),
- the method further comprises:
- providing fifth information (I5) which is representative of one of an upper threshold voltage (Vₘₐₓ) of the DC link intermediate circuit (220) and an upper threshold power (Pₘₐₓ) of the DC link intermediate circuit (220), wherein
- if the operating mode is the second operating mode, the activating command (CC) is only generated if the comparison between the second (I2) and the fifth (I5) information reveals one of:
• the actual voltage (Vₐ) of the DC link intermediate circuit (220) is below the upper threshold voltage (Vₘₐₓ), and
• the actual power (Pₐ) of the DC link intermediate circuit (220) is below the upper threshold power (Pₘₐₓ),
and
- if the operating mode is the second operating mode and if the comparison between the second (I2) and the fifth (I5) information reveals one of:
• the actual voltage (Vₐ) of the DC link intermediate circuit (220) is equal to or above the upper threshold voltage (Vₘₐₓ), and
• the actual power (Pₐ) of the DC link intermediate circuit (220) is equal to or above the upper threshold power (Pₘₐₓ),
a chopper command (BC) is generated which is configured to cause energy transfer from the DC link intermediate circuit (220) to the energy dissipating element (260).

6. Method according any one of claims 2 to 5, wherein
- the DC link intermediate circuit (220) is connectable to a first converter (212) on its first side, and to a second converter (212) on its second side,
- the DC link intermediate circuit (220) is configured to be powered from a supply grid via the first converter (212),
- the DC link intermediate circuit (220) is configured to be connected to the electro-mechanical actuator (250) via the second converter (216), and
- the method further comprises:
- providing sixth information (I6) which is representative of one of a rectified supply grid voltage (V_{g}) and a grid power output (P_{g}),
- wherein, if the operating mode is the second operating mode,
- the third information (I3) is also determined depending on the sixth information (I6) so that one of:
▪ the DC link voltage setpoint (Vₛ) is greater than the rectified supply grid voltage (V_{g}); and
▪ the DC link power setpoint (Pₛ) is greater than the grid power output (P_{g}), and
- the fourth information (I4) is also determined depending on the sixth information (I6) so that one of:
▪ one of the minimum predefined voltage (Vₘᵢₙ) is greater than the rectified supply grid voltage (V_{g}) , and
▪ the reference power range (P_{ref}) excludes the grid power output (P_{g}).

7. Method according to any one of the preceding claims, further comprising
- providing seventh information (I7) which is representative of one of a nominal charging voltage (Vₙ) and a nominal charging power (Pₙ) of the energy storage unit (240),
- providing eighth information (I8) which is representative of one of the actual charging voltage (Vᵤ) and the actual charging power (Pᵤ) of the energy storage unit (240), wherein
- if the operating mode is the second operating mode, the activating command (CC) is only generated if a comparison between the seventh (I7) and the eighth (I8) information reveals one of:
▪ the actual charging voltage (Vᵤ) of the energy storage unit (240) does not exceed the nominal charging voltage (Vₙ) by more than a critical voltage threshold, and
▪ the actual charging power (Pᵤ) of the energy storage unit (240) does not exceed the nominal charging power (Pₙ) by more than a critical power threshold,
and,
- if the operating mode is the second operating mode and if the comparison between the seventh (I7) and the eighth (I8) information reveals one of:
▪ the actual charging voltage (Vᵤ) of the energy storage unit (240) exceeds the nominal charging voltage (Vₙ) by more than the critical voltage threshold, and
▪ the actual charging power (Pᵤ) of the energy storage unit (240) exceeds the nominal charging power (Pₙ) by more than the critical power threshold,
a chopper command (BC) is generated which is configured to cause transfer of energy from the DC link intermediate circuit (220) to an energy dissipating element (260).

8. Method according to claim 7, wherein
- if the operating mode is the first operating mode and if a comparison between the seventh (I7) and the eighth information (I8) reveals one of:
• the actual charging voltage (Vᵤ) of the energy storage unit (240) is above the nominal charging voltage (Vₙ), and
• the actual charging power (Pᵤ) of the energy storage unit (240) is above the nominal charging power (Pₙ),
a discharging command (DC) is generated for the converter (214) which is configured to cause the converter (214) to regulate at least one of a voltage and a power at the DC link intermediate circuit (220) such that energy is transferred from the energy storage unit (240) to the electro-mechanical actuator via the DC link intermediate circuit (220).

9. Method according to claim 8 in its dependency on claim 2, wherein
- for the first operating mode, the third information (I3) is based on one of:
• the DC link voltage setpoint (Vₛ) is above the actual voltage (Vₐ) of the DC link intermediate circuit (220), and
• the DC link power setpoint (Pₛ) is different from the actual power (Pₐ) at the DC link intermediate circuit (220),
- so that, when the converter (214) is operated according to the third information (I3), at least one of the voltage and the power in the DC link intermediate circuit (220) is regulated by the converter (214), until one of the DC link voltage setpoint (Vₛ) and the DC link power setpoint (P_{S}), is attained, by transferring energy from the energy storage unit (240) to the electro-mechanical actuator (250) via the DC link intermediate circuit (220), thus discharging the energy storage unit (240).

10. Computer program comprising instructions which, when the program is executed by a controller, cause the controller to carry out the method of any one of claims 1 to 9.

11. Computer-readable data carrier having the computer program of claim 10 stored thereon.

12. Controller (210, 218) comprising means for executing the method according to any one of claims 1 to 9.

13. An electro-mechanical actuation system (200) for a wind turbine (100) comprising:
- a first converter (212) connected to a supply grid,
- a DC link intermediate circuit (220) connected on its first side to the first converter (212) and configured to be powered from the supply grid via the first converter (212),
- a converter (214) which is bidirectional,
- an electro-mechanical actuator (250),
- an energy storage unit (240) connected to the DC link intermediate circuit (220) via the converter (214),
- the controller (210, 218) according to claim 12, wherein
- the electro-mechanical actuator (250) is connected to the DC link intermediate circuit (220),
- the controller (210, 218) is configured to control the converter (214) according to the activating command (CC),
- the converter (214) is configured to regulate at least one of a voltage and a power at the DC link intermediate circuit (220) upon reception of the activating command (CC) such that energy is transferred from the DC link intermediate circuit (220) into the energy storage unit (240).

14. The system (200) according to claim 13, further comprising:
- a second converter (216) connected to a second side of the DC link intermediate circuit (220),
- a braking resistor (260) connected to the DC link intermediate circuit (220) via a switching module (261), the switching module (261) communicatively coupled to the controller (210, 218).

15. The system (200) according to any one of claims 12 to 14, further comprising at least one of
- a first measuring device connected to the DC link intermediate circuit (220) and configured to measure at least one of an actual voltage (Vₐ) and an actual power (Pₐ) of the DC link intermediate circuit (220), and
- a second measuring device connected to the energy storage unit (240) and configured to measure at least one of an actual charging voltage (Vᵤ) and an actual charging power (Pᵤ) of the energy storage unit (240).
